(19) Europäisches Patentamt
European Patent Office
Office européen des brevets

(11) Veröffentlichungsnummer: **0 299 344 B2**

(12) # NEUE EUROPÄISCHE PATENTSCHRIFT

(45) Veröffentlichungstag der neue Patentschrift: **27.12.95**

(21) Anmeldenummer: **88110765.0**

(22) Anmeldetag: **06.07.88**

(51) Int. Cl.6: **C08F 6/18**, B01D 1/18, C08J 3/16, C08L 33/00, C08L 25/04, C08L 27/06, //(C08L27/06,33:00,25:04)

Die Akte enthält technische Angaben, die nach dem Eingang der Anmeldung eingereicht wurden und die nicht in dieser Patentschrift enthalten sind.

(54) **Staubarmes sprühgetrocknetes Emulsionspolymerisat und Verfahren zu seiner Herstellung und Anwendung**

(30) Priorität: **17.07.87 DE 3723668**

(43) Veröffentlichungstag der Anmeldung: **18.01.89 Patentblatt 89/03**

(45) Bekanntmachung des Hinweises auf die Patenterteilung: **10.10.90 Patentblatt 90/41**

(45) Bekanntmachung des Hinweises auf die Entsheidung über den Einspruch: **27.12.95 Patentblatt 95/52**

(84) Benannte Vertragsstaaten: **DE FR GB IT NL SE**

(56) Entgegenhaltungen:
**EP-A- 0 154 189**
**EP-B- 0 071 718**
**DE-A- 2 543 542**
**DE-A- 3 022 400**
**DE-B- 2 213 214**

**Ullmanns Encyklopädie der technischen Chemie, 4. Auflage, Weinheim 1980, Band 19, Seiten 17-18**

**Kunststoff Handbuch, Band 2/1, K. Felger, Polyvinylchlorid, Seiten 221-223**

(73) Patentinhaber: **Röhm GmbH**
**Kirschenallee**
**D-64293 Darmstadt (DE)**

(72) Erfinder: **Klesse, Wolfgang, Dr.**
**Tucholskyweg 47**
**D-6500 Mainz 31 (DE)**
Erfinder: **Rauch, Hubert**
**Odenwaldstr. 6**
**D-6108 Weiterstadt 1 (DE)**
Erfinder: **Arndt, Peter Joseph, Dr.**
**Im Säbchen 9**
**D-6104 Seeheim-Jugenheim (DE)**
Erfinder: **Sütterlin, Norbert, Dr.**
**Am Hang 4**
**D-6109 Mühltal-Nieder-Beerbach (DE)**

EP 0 299 344 B2

## Beschreibung

Die Erfindung betrifft sprühgetrocknete Emulsionspolymerisate auf Basis von Methylmethacrylat und/oder Styrol in Form von Pulvern, bestehend aus Pulverkörnern, die im wesentlichen aus aggregierten Latexpartikeln von Emulsionspolymerisaten zusammengesetzt sind, sowie ein Verfahren zu ihrer Herstellung und ihre Anwendung als PVC-Verarbeitungshilfsmittel.

Stand der Technik

Sprühgetrocknete Emulsionspolymerisat-Pulver sind bekannt; einige davon haben eine sehr niedrige Glastemperatur und werden mit Antibackmitteln vermischt, damit die Pulverteilchen beim Lagern nicht zusammenkleben; vgl. DE-A 33 44 242.

Im Gegensatz zu diesen weichen Pulvern befaßt sich die Erfindung mit Pulvern, die überwiegend aus harten Emulsionspolymerisaten auf Basis von Methylmethacrylat und/oder Styrol, die eine dynamische Glastemperatur über 90 Grad C haben, zusammengesetzt sind. Auch die Sprühtrocknung harter Emulsionspolymerisate ist bekannt. So werden nach DE-A 26 29 924 wäßrige Dispersionen von Emulsionspolymerisaten mit einer Mindestfilmbildungstemperatur im Bereich von 20 bis 80 Grad C unter Zusatz eines Wachses zu einem redispergierbaren Pulver sprühgetrocknet. Die Anwesenheit eines Wachses ist jedoch bei den meisten Anwendungen sprühgetrockneter Emulsionspolymerisate unerwünscht.

Beispiele sprühgetrockneter Emulsionspolymerisate mit einer dynamischen Glastemperatur über 90 °C sind die aus der DE 21 01 808 bekannten PVC-Verarbeitungshilfsmittel. Sie bestehen aus einem Pulver, dessen Körner aus lose aggregierten Feinpartikeln zusammengesetzt sind. Diese Kornstruktur entsteht, wenn man die zugrundeliegende wäßrige Dispersion des Emulsionspolymerisats bei verhältnismäßig niedriger Luftaustrittstemperatur sprühtrocknet, so daß die Latexteilchen in den einzelnen Tröpfchen bzw. Pulverkörnchen nicht bis zur Schmelz-bzw. Sintertemperatur erhitzt werden. Die lockere Feinstruktur wirkt sich vorteilhaft auf die Verarbeitungseigenschaften des PVC-Verarbeitungshilfsmittels aus. Sie hat aber den Nachteil, daß bei der Sprühtrocknung ein beträchtlicher Anteil an äußerst feinen Pulverkörnchen entsteht. Da dieser Feinanteil im Zyklonabscheider der Sprühtrocknungsanlage nicht vollständig zurückgehalten wird, entstehen Ausbeuteverluste und eine Belastung der Umwelt durch ausgetragenen Polymerisatstaub. Auch beim Hantieren mit dem pulverförmigen Produkt kann es zu störender Staubentwicklung kommen.

Diese Nachteile lassen sich zwar auf einfache Weise vermeiden, wenn man die Temperatur in der Sprühtrocknungsanlage so erhöht, daß die Latexteilchen in den Pulverkörnchen miteinander verschmelzen. Dadurch verschlechtert sich aber die Aufschließbarkeit, was sich beispielsweise beim Einarbeiten in PVC-Formmassen störend bemerkbar macht. Es ist äußerst schwierig, die Temperatur in der Sprühtrocknungsanlage so genau zu steuern, daß die Latexpartikel in den Pulverkörnchen gerade so weit miteinander versintern, daß kein schwer abscheidbarer Feinstaub und beim Hantieren kein staubförmiger Abrieb entsteht, aber andererseits die Körnchen beim Einarbeiten in PVC-Formmassen schnell und vollständig aufgeschlossen werden.

Sprühgetrocknete Emulsionspolymerisate mit vermindertem Feinstaubgehalt werden gemäß DE-A 34 05 651 aus bimodalen Kunststoffdispersionen erhalten. Dabei können auch Dispersionen unterschiedlich zusammengesetzter Dispersionen gemischt und sprühgetrocknet werden; eine Aufgabe, die durch eine solche Mischung gelöst werden könnte, ist dort nicht offenbart. Auch bei diesen Pulvern ist eine weitere Verminderung des Feinstaubgehalts wünschenswert.

Aufgabe und Lösung

Es bestand die Aufgabe, sprühgetrocknete Emulsionspolymerisate in Form von Pulvern, bestehend aus Pulverkörnern, die im wesentlichen nur aus aggregierten Latexpartikeln von Emulsionspolymerisaten zusammengesetzt sind, in einer nicht staubenden, aber in leicht aufschließbarer Form zu entwickeln und mit hoher Ausbeute herzustellen. Untergeordnete Mengen an Hilfsstoffen, die üblicherweise in wäßrigen Latices enthalten sind, wie Emulgiermittel oder Salze, brauchen bei der Herstellung des Pulvers nicht ausgeschlossen zu werden.

Es wurde gefunden, daß sprühgetrocknete Emusionspolymerisate in nicht staubender Form mit hoher Ausbeute herstellbar sind, wenn die Pulverkörnchen aus aggregierten Latexteilchen von wenigstens zwei verschiedenen Emusionspolymerisaten A und B zusammengesetzt sind, von denen A in einer größeren Menge als B vorliegt und von denen A ein Emulsionspolymerisat mit einer dynamischen Glastemperatur über 90 °C, bevorzugt über 110 °C, ist, aufgebaut zu

70 - 100 Gew.-% aus Methylmethacrylat und/oder Styrol,

0 - 20 Gew.-% aus einem Alkylacrylat oder einem von Methylmethacrylat verschiedenen Alkylmethacrylat,

0 - 10 Gew.-% aus anderen, damit mischpolymerisierbaren Vinylmonomeren

und das Emulsionspolymerisat B eine dynamische Glastemperatur unter 105 °C, bevorzugt unter 90 °C, hat und die dynamische Glastemperatur von B mindestens 10 K unter der von A liegt.

Der Einfluß eines Zusatzes des Polymerisats B auf die Ausbeute bei der Sprühtrocknung geht aus den nachfolgenden Vergleichswerten hervor. Es wurden Latices folgender Emulsionspolymerisate A und B eingesetzt:

A-1: 68,2 % Styrol
27,0 % Methylmethacrylat
3,0 % Äthylacrylat
1,8 % Äthylenglykol-dimethacrylat
dynamische Glastemperatur $T_{lambda-max}$ = 125 °C

A-2: 47,5 % Methylmethacrylat
47,5 % Isobutylmethacrylat
5,0 % Äthylenglykol-dimethacrylat
dynamische Glastemperatur $T_{lambda-max}$ = 102 °C

B-1: 65,0 % Methylmethacrylat
34,0 % Butylacrylat
1,0 % Methacrylsäure
dynamische Glastemperatur $T_{lambda-max}$ = 60 °C

B-2: 100 % Isobutylmethacrylat
dynamische Glastemperatur $T_{lambda-max}$ = 80 °C

Beim Sprühtrocknen wurden folgende Durchsatzmengen und Ausbeuten an trockenem Pulverprodukt erreicht:

| Latex bzw. Mischung | Durchsatz in kg/h ber. als Feststoff | Ausbeute % d. einges. Festst. |
|---|---|---|
| 100 % A-1 | 80 | 75 % |
| 100 % A-1 | 120 | 75 % |
| 95 % A-1 + 5 % B-1 | 162 | 96 % |
| 100 % A-2 | 137 | 88 % |
| 100 % A-2 | 162 | 87 % |
| 95 % A-2 + 5 % B-2 | 162 | 93 % |

In beiden Fällen konnte mit der Dispersion der Mischung A + B die Trockenleistung der Sprühtrocknungsanlage voll ausgenutzt und eine deutliche Steigerung der Ausbeute erzielt werden. Die verminderte Staubbildung war augenfällig.

Für die Aufschlußfähigkeit des sprühgetrockneten Emulsionspolymerisats ist es wesentlich, daß die Latexpartikel des Emulsionspolymerisats in den Pulverkörnchen in aggregierter Form erhalten sind. Das Ziel der Erfindung wird jedoch nicht erreicht, wenn die Latexpartikel nur durch Oberflächenkräfte lose aneinander haften und bereits durch geringste mechanische Kräfte abgetrennt werden können. Andererseits dürfen die Latexpartikel auch nicht völlig zu einer glasigen Masse miteinander verschmolzen sein, die im mikroskopischen Bild durchscheinend aussieht. Vielmehr sollen die Latexpartikel möglichst nur punktförmig mit den im gleichen Pulverkorn benachbarten Partikeln versintert oder verschweißt sein. Im mikroskopischen Bild erscheinen die Pulverkörnchen als eine weiße oder schwach durchscheinende Masse. Beim Zerdrücken setzen die Körnchen ihrer Zerstörung fast keinen spürbaren Widerstand entgegen und lassen sich auf einer festen Unterlage zu einer flachen Schicht verschmieren.

Diese Struktur der erfindungsgemäßen sprühgetrockneten Emusionspolymerisatpulver beruht auf den unterschiedlichen Eigenschaften der an ihrem Aufbau beteiligten Latexteilchen A und B. Die Teilchen A bleiben bei der Sprühtrocknung unterhalb der statischen Glastemperatur, so daß sie bei Berührung miteinander nicht versintern oder verschweißen. Dagegen erweichen die Teilchen B aufgrund ihrer niedrigeren Glastemperatur bei einer Temperatur, bei der die Teilchen A noch hart sind. Sie bilden unter den Bedingungen der Sprühtrocknung bei der Berührung mit den Teilchen A oder mit anderen Teilchen B punktförmige Kleb- oder Schweißstellen aus, die das Pulverkörnchen in sich verfestigen, ohne es zu einer homogenen Masse verschmelzen zu lassen. Eine solche unerwünschte völlige Verschmelzung aller Teilchen wird vor allem durch das mengenmäßige Übergewicht der Teilchen A verhindert.

Während ein gleichartiger Zustand der beginnenden Verschmelzung der einzelnen Latexpartikel bei einem einheitlich zusammengesetzten Emulsionspolymerisat nur in einem äußerst schmalen Temperaturbereich bei der Sprühtrocknung erreichbar ist, läßt sich beim Sprühtrocknen einer aus dem Polymerisaten A und B zusammengesetzten Dispersion der Bereich, in welchem der erwünschte Zustand der Versinterung erreicht wird, leicht einstellen. Es ist überraschend, daß schon ein Zusatz von einem Prozent oder weniger des Polymerisats B die Ausbeute bei der Sprühtrocknung um mehrere Prozent bis über 90% erhöht. Noch überraschender ist die Tatsache, daß die Aufschließbarkeit des Pulvers im Vergleich zu dem weichmacherfreien, stark staubenden Pulver aus A allein noch verbessert wird, während man eher eine schwierigere Aufschließbarkeit als Folge einer stärkeren Verschmelzung hätte befürchten müssen. So sind beim Verarbeiten des einheitlich aus A aufgebauten Pulvers mit klarer PVC-Formmasse in manchen Fällen nach ungenügender Plastifizierung noch unaufgeschlossene Teilchen oder Streifen oder Schlieren erkennbar. Unter den gleichen Verarbeitungsbedingungen ergeben die erfindungsgemäßen Pulver weniger oder gar keine Störungen dieser Art.

Ausführung der Erfindung

Die Erfindung ist nicht auf PVC-Verarbeitungshilfsmittel beschränkt, obwohl diese im Vordergrund der Betrachtung stehen. Ähnliche Störungen durch Ausbeuteverluste, Umweltverschmutzung und Staubbelästigung können bei allen sprühgetrockneten Emulsionspolymerisaten entstehen, deren Pulverkörnchen aus aggregierten, also nicht hart verschmolzenen Latexteilchen bestehen. Sie haben den Vorteil, daß sie sich schneller als verschmolzene Teilchen in organischen Lösungsmitteln auflösen oder mit Weichmachern homogene Plastisole oder thermogelierte Beschichtungen, z.B. als Arzneimittelüberzüge, ergeben.

Als Polymerisat A können daher alle Emulsionspolymerisate eingesetzt werden, die zu

70 - 100 Gew.-% aus Methylmethacrylat und/oder Styrol,

0 - 20 Gew.-% aus einem Alkylacrylat oder einem von Methylmethacrylat verschiedenen Alkylmethacrylat,

0 - 10 Gew.-% aus anderen, damit mischpolymerisierbaren Vinylmonomeren

aufgebaut sind und eine dynamische Glastemperatur über 90, bevorzugt über 110 °C, haben und die in Form der beschriebenen Pulver vorteilhaft verwertbar sind; die dynamische Glastemperatur ($T_{lambda-max}$) wird nach DIN 53 445 bestimmt.

Die statische Glastemperatur $T_g$ liegt in der Regel 20 bis 30 K unter der dynamischen Glastemperatur. Ihr Wert kann für Copolymerisate näherungsweise aus den bekannten Daten der Homopolymerisate der beteiligten Monomeren berechnet werden.

Beispiele für andere, mit Methylmethacrylat und/oder Styrol und gegebenenfalls mit Alkylacrylaten oder -methacrylaten mischpolymerisierbare Comonomere sind Vinyltoluol, alpha-Methylstyrol, Acryl- und Methacrylnitril, Acryl- und Methacrylsäure, Malein- und Itakonsäure, Vinylchlorid, Vinylacetat, Olefine und Vinylalkyläther.

Zu bekannten Emulsionspolymerisaten dieser Art, die in Form von sprühgetrockneten Pulvern hergestellt und verwendet werden, gehören z.B.

1) PVC-Verarbeitungshilfsmittel gemäß DE-C 21 01 808, enthaltend Copolymerisate aus 70-95 % Methylmethacrylat und 5-30 % weiche Homopolymerisate ergebenden Comonomeren, insbesondere $C_{1-8}$-Alkylacrylate, mit einer reduzierten Viskosität zwischen 200 und 1000 ml/g;

2) Polymerisatpulver zur Herstellung von weichmacherhaltigen Plastisolen gemäß DE-C 25 43 542 und EP-B 30 590, aufgebaut aus >70 % Methylmethacrylat und einem basischen Comonomeren, wie Vinylimidazol, oder aus einem Kern/Schale-Emulsionspolymerisat, wobei der Kern wenigstens zum Teil aus Acrylestern oder höheren Methacrylestern und die Schale zu >50 % aus Methylmethacrylat besteht.

Sofern in den oben genannten Patentschriften auch Polymerisate mit $T_{lambda-max}$<90 °C oder mit abweichenden Zusammensetzungen beschrieben sind, ist die Anwendung der vorliegenden Erfindung nur für Polymerisate der beanspruchten Zusammensetzung mit $T_{lambda-max}$>90 °C sinnvoll, weil nur bei diesen die geschilderten Probleme des Staubens auftreten. Sie nehmen mit zunehmender Glastemperatur zu. Typische Emulsionspolymerisate für die Erfindung haben dynamische Glastemperaturen im Bereich von 100 bis 180, insbesondere 110 bis 160 Grad C.

Die Erfindung erweist sich als besonders vorteilhaft für vernetzte Polymerisate A, d.h. solche, an deren Aufbau mehrfach ungesättigte Vinylmonomere, wie Divinylbenzol, Triallylcyanurat, Acryl- oder Methacrylester von mehrwertigen Alkoholen oder Alkylen-bis-(meth)acrylamide in Mengen von z.B. 0,01 bis 10 Gew.-% beteiligt sind. Dagegen sind die Polymerisate B vorzugsweise unvernetzt.

Die Molekulargewichte der Emulsionspolymerisate richten sich in an sich bekannnter Weise nach den Erfordernissen des Anwendungsfalles. Beispielsweise kann das Molekulargewicht (Gewichtsmittelwert) eines als PVC-Verarbeitungshilfsmittel einzusetzenden Emulsionspolymerisats im Bereich von 500 000 bis einigen Millionen, insbesondere 1 bis 4 Millionen liegen.

Die Emulsionspolymerisate B können aus den gleichen Monomeren aufgebaut sein wie die Polymerisate A, jedoch mit dem Unterschied, daß der Anteil der harte Homopolymerisate ergebenden Monomeren zugunsten der weiche Homopolymerisate ergebenden Monomeren so weit vermindert ist, daß die dynamische Glastemperatur des Emulsionspolymerisats unter 105 ° C und mindestens 10 K unter $T_{lambda-max}$ von A liegt. Obwohl das Ziel der Erfindung, nämlich eine erhöhte Sprühtrocknungsausbeute und verminderte Feinstaubbildung, auch erreicht wird, wenn die Polymerisate A und B sehr unterschiedlich zusammengesetzt sind, ist es für die Anwendung der Pulver meistens vorteilhafter, wenn zwischen den Polymerisaten A und B eine möglichst hohe Verträglichkeit besteht (vgl. Brandrup-Immergut, Polymer Handbook, 2nd Ed. Wiley-Interscience pg. 111-211, 1975; DE-A 34 36 476, DE-A 34 36 477). Verträglichkeit ist in der Regel gegeben, wenn aus einer Lösung des Polymerisatgemisches ein klarer Film hergestellt werden kann. Die Verträglichkeit der Polymeren ist umso größer, je ähnlicher sie zusammengesetzt sind. Vorzugsweise sind am Aufbau beider Polymerisate die gleichen Monomeren beteiligt, wobei sich ihre Mengenverhältnisse im oben beschriebenen Sinne unterscheiden.

Bevorzugte Produkte gemäß der Erfindung enthalten B ein Emulsionspolymerisat aus

15 - 100 Gew.-% wenigstens eines Alkylacrylats oder eines mehr als 3 Kohlenstoffatome im Alkylrest aufweisenden Alkylmethacrylats,

0 - 85 Gew.-% anderen, damit mischpolymerisierbaren Vinylmonomeren, besonders Methylmethacrylat oder Styrol.

Der Unterschied zwischen der dynamischen Glastemperaturen der Polymerisate A und B beträgt mindestens 10 und vorzugsweise mindestens 20 K, kann aber auch 50 K oder mehr ausmachen. Ist der Unterschied gering, bedarf es einer sehr genauen Steuerung der Sprühtrocknungstemperatur, um den erwünschten Grad der Verschweißung zwischen den Latexteilchen zu erreichen. Die dynamische Glastemperatur des Polymerisats B liegt am vorteilhaftesten im Bereich von 55 bis 90 ° C. Sie kann auch niedriger liegen, wenn auch dann - vor allem bei hohen Anteilen von B - die Gefahr des Verblockens des Pulvers beim Lagern besteht.

In der Regel werden die anwendungstechnischen Eigenschaften des sprühgetrockneten Pulvers überwiegend bis ausschließlich durch das Polymerisat A bestimmt. Es stellt in jedem Fall den überwiegenden Anteil. Das bevorzugte Mengenverhältnis A : B ist 70 : 30 bis 99,5 : 0,5 Gew.-Teile, mehr bevorzugt 80 : 20 bis 99,5 : 0,5 Gew.-Teile. Das Mengenverhältnis kann umso größer gewählt werden, je niedriger die dynamische Glastemperatur von B ist. Der Anteil des Polymerisats B muß jedenfalls ausreichend sein, um Haftbrücken zwischen den Latexteilchen des Polymerisats A auszubilden. In der Mehrzahl der Fälle wird dieses Ziel bei Mengenverhältnissen zwischen 90 : 10 und 99 : 1 erreicht.

Die Wirksamkeit der Komponente B hängt teilweise von der Latex-Teilchengröße ab. Die Teilchengröße der Latexpartikel A ist an sich nicht kritisch, soweit die Versprühbarkeit gewährleistet ist. Sehr feinteilige Dispersionen sind bei hohem Feststoffgehalt dickflüssig und schwer versprühbar. Grobteilige Dispersionen bereiten manchmal wegen einer zu hohen Scherempfindlichkeit Schwierigkeiten beim Versprühen. Die günstigste Teilchengröße für die erfindungsgemäß einzusetzenden Emulsionspolymerisate A liegt zwischen 0,1 und 1 Mikrometer. Die Teilchengröße des Polymerisats B kann in der gleichen Größenordnung, jedoch möglichst nicht darüber liegen. Vorzugsweise hat B eine geringere Teilchengröße als A; das Teilchengrößenverhältnis A : B liegt bevorzugt im Bereich von 1,2 : 1 bis 20 : 1, insbesondere von 1,5 : 1 bis 10 : 1. Die bevorzugte Latex-Teilchengröße von B liegt zwischen 0,03 und 0,5 Mikrometer (Maximalwert der Verteilungskurve).

Die Herstellung der Latices der Emulsionspolymerisate A und B ist allgemein bekannt und bedarf an dieser Stelle keiner Beschreibung. Sie enthalten üblicherweise geringe Mengen an Hilfsstoffen, vor allem Emulgiermittel und Salze, die aus dem Zerfall der bei ihrer Herstellung verwendeten Initiatoren hervorgegangen sind. Bei der Mischung der Latices von A und B ist auf ausreichende Verträglichkeit zu achten. Eine begrenzte Aggregation der Latexteilchen ist nicht immer von Nachteil, sofern die Versprühbarkeit in Sprühtrocknungsanlagen gewährleistet bleibt Eine störende Unverträglichkeit kann auftreten, wenn die Latices erhebliche Mengen an entgegengesetzt geladenen Emulgiermitteln enthalten.

Die Viskosität der zum Sprühtrocknen eingesetzten Mischung der Dispersionen A und B liegt zweckmäßig unter 5000, vorzugsweise unter 1000 mPa s, was bei Feststoffgehalten unter 60 Gew.-% und Teilchengrößen über 0,3 Mikrometer meistens der Fall ist. Feinteiligere Dispersionen A erfordern einen niedrigeren Feststoffgehalt, z.B. 30 bis 50 Gew.-%.

Die Sprühtrocknung erfolgt in bekannter Weise. Großtechnisch werden sogenannte Sprühtürme verwendet, die üblicherweise im Gleichstrom mit der eingesprühten Dispersion von ober nach unten mit Heißluft durchströmt werden. Die Dispersion wird durch eine oder viele Düsen versprüht oder bevorzugt mittels einer schnell rotierenden Lochscheibe zerstäubt. Die eintretende Heißluft hat vorzugsweise eine Temperatur von 100 bis 250 Grad C. Für die Eigenschaften des sprühgetrockneten Emulsionspolymerisats ist die Austrittstemperatur der Luft entscheidend, d.h. die Temperatur, bei der die getrockneten Pulverkornchen am Fuß des Sprühturms oder in einem Zyklonabscheider von dem Luftstrom getrennt werden. Diese Temperatur soll möglichst unter der Temperatur liegen, bei der das Emulsionspolymerisat A sintert oder schmilzt, was allenfalls ein geringfügiges Überschreiten der statischen Glastemperatur zuläßt. Dagegen soll die statischen Glastemperatur des Polymerisats B überschritten werden, damit es erweicht und seine bindende Wirkung entfalten kann. Die dynamische Glastemperatur kann gegebenenfalls auch überschritten werden, jedoch ist das nicht vorteilhaft. In vielen Fällen ist eine Austrittstemperatur von 60 - 80 Grad C gut geeignet. Darüber oder darunter liegende Temperaturen sind je nach der Zusammensetzung der Polymerisate A und B anwendbar.

Für eine genaue Einstellung der Austrittstemperatur kann man vom Schubmodul der Polymeren A und B ausgehen. Es ist günstig, wenn die Austrittstemperatur bei einem Wert liegt, bei dem der Schubmodul des Polymerisats A mindestens 800 und der des Polymerisats B nicht über 800, vorzugsweise nicht über 500 und am besten nicht über 300 $N/mm^2$ liegt.

Die Austrittstemperatur läßt sich bei konstantem Luftstrom durch Variation der kontinuierlich je Zeiteinheit eingesprühten Dispersionsmenge regeln. Bei optimaler Anpassung des Anteils, der Glastemperatur und der Teilchengröße des Polymerisats B sowie der Temperaturführung im Trockner wird ein Zustand schwacher Versinterung in den einzelnen Pulverkörnchen erreicht, bei dem einerseits die Latexpartikel fest genug gebunden sind, daß sie nicht unter Staubbildung abgerieben werden, andererseits der Verbund lose genug ist, damit das Pulver schnell und leicht gelöst oder in einer PVC-Schmelze homogen verteilt wird.

Die leichte Versinterung der Latexteilchen innerhalb der Latexkörnchen macht sich auf mehrfache Weise bemerkbar. Die Steigerung der Ausbeute bei der Sprühtrocknung beruht auf dem verminderten Feinkornanteil, der sich nicht vollständig aus dem Luftstrom der Sprühtrocknungsanlage abtrennen läßt, und dadurch zum Teil verlorengeht. Aus dem gleichen Grund tritt bei der Handhabung des Pulvers, z.B. beim Abfüllen, deutlich weniger Staubbildung auf. Diese Wirkung ist meistens schon ohne jede Messung sichtbar; öffnet man eine wenig gefüllte Pulverflasche kurz nachdem der Inhalt aufgeschüttelt worden ist, so entweicht bei herkömmlichem Pulverinhalt eine sichtbare Staubwolke, während das erfindungsgemäße Pulver keine oder höchstens eine schwache Staubwolke erzeugt. Auch innerhalb der Pulverflasche zeigt sich im ersten Fall die starke Staubbildung, die sich erst in 10 bis 20 sec absetzt und einen deutlichen Belag an den Glaswänden hinterläßt. Dagegen setzt sich das erfindungsgemäße Pulver innerhalb weniger Sekunden ab und läßt einen weit geringeren Staubfilm an der Glaswand zurück.

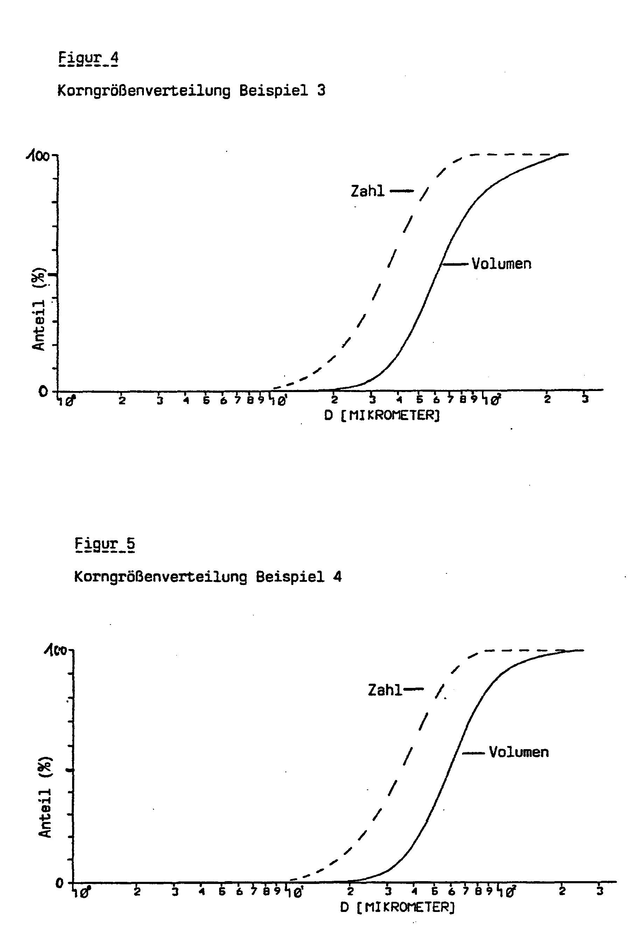

Die verminderte Staubbildung erweist sich als dauerhaft. Während das nur aus dem Polymerisat A aufgebaute Pulver bei mechanischer Bewegung durch Abrieb immer mehr Feinkornpartikel bildet, ist dieser Effekt bei dem Pulver gemäß der Erfindung gering. Die Stabilität der Pulverkörnchen bei mechanischer Belastung läßt sich durch eine Ultraschallbehandlung sichtbar machen. Zu diesem Zweck wurden jeweils 600 ml einer wäßrigen Suspension des Pulvers in Wasser in einem 800 ml-Becherglas 10 sec lang in einem Ultraschallbad (Sonorex TK 52, Hersteller Bandelin) bei einer HF-Frequenz von 40 kHz und einer HF-Leistung von 50/100 Watt beschallt. Vorher und nachher wurde die Korngrößenverteilung durch Messung der Lichtextinktion einer durch die Meßzelle strömenden Suspension der Pulverkörnchen in Wasser bestimmt; Streulichtmeßgerät "Kratel Partoscop F" der Kratel GmbH, Göttingen. Fig. 1 gibt die differentielle Korngrößenverteilung vor und nach der Beschallung wieder. Der Feinkornanteil (Körnchen unter 10 Mikrometer) nach der Beschallung liegt bei dem herkömmlichen Pulver bei 5 Vol.-%, bei dem erfindungsgemäßen Pulver nach Beispiel 1 dagegen nur bei 0,5 Vol.-%.

Für die Beurteilung des Staubverhaltens ist nach der DFG-Mitteilung XIX über "Maximale Arbeitsplatzkonzentrationen und biologische Arbeitsstofftoleranzwerte" von 1983 der Anteil an Pulverkörnchen einer Größe unter 10 Mikrometer wesentlich. Teilchen dieser Größe vermögen beim Einatmen in die Lungenalveolen einzudringen und können Schädigungen auszulösen. Deshalb ist die Verminderung der Feinstaubbildung arbeitshygienisch von größter Bedeutung.

Liegt der zahlenmäßige Anteil der Feinstaubkörnchen in Pulvern, die allein aus einem Polymerisat vom Typ A aufgebaut sind, oft über 10 %, manchmal aber auch über 50 %, so läßt er sich durch Zusatz von 5 % eines Polymerisats vom Typ B auf ein Zehntel dieses Wertes oder noch weniger vermindern.

Die Erfindung betrifft weiter eine Formmasse wie beschrieben in Anspruch 10.

## Patentansprüche

**1.** Sprühgetrocknetes Emulsionspolymerisat, bestehend aus Pulverkörnern, die aus aggregierten Latexteilchen zusammengesetzt sind, enthaltend Latexteilchen von wenigstens zwei verschiedenen Emulsionspolymerisaten A und B,
dadurch gekennzeichnet,
daß das Emulsionspolymerisat A in einem größeren Mengenanteil als B vorliegt und
A ein Emulsionspolymerisat mit einer dynamischen Glastemperatur über 90 °C, aufgebaut zu
70 - 100 Gew.-% aus Methylmethacrylat und/oder Styrol,
0 - 20 Gew.-% aus einem Alkylacrylat oder einem von Methylmethacrylat verschiedenen Alkylmethacrylat,
0 - 10 Gew.-% aus anderen, damit mischpolymerisierbaren Vinylmonomeren
B ein Emulsionspolymerisat mit einer dynamischen Glastemperatur unter 105 °C ist und die dynamische Glastemperatur von B mindestens 10 K unter der von A liegt.

**2.** Sprühgetrocknetes Emulsionspolymerisat nach Anspruch 1, dadurch gekennzeichnet, daß es die Emulsionspolymerisate A und B im Mengenverhältnis 70 : 30 bis 99,5 : 0,5 Gew.-Teile enthält.

**3.** Sprühgetrocknetes Emulsionspolymerisat nach den Ansprüchen 1 und 2, dadurch gekennzeichnet, daß die Latexteilchen des Emulsionspolymerisat B eine geringere Teilchengröße als die Latexteilchen des Emulsionspolymerisats A haben.

**4.** Sprühgetrocknetes Emulsionspolymerisat nach den Ansprüchen 1 bis 3, dadurch gekennzeichnet, daß die Latexteilchen des Emulsionspolymerisats A in den Pulverkörnern nicht miteinander versintert oder verschweißt sind und daß die Latexteilchen des Emulsionspolymerisats B miteinander und mit denen des Emulsionspolymerisats A versintert oder verschweißt sind.

**5.** Sprühgetrocknetes Emulsionspolymerisat nach den Ansprüchen 1 bis 4, dadurch gekennzeichnet, daß das Emulsionspolymerisat B zu 15 - 100 Gew.-% aus einem Alkylacrylat oder einem mehr als 3 Kohlenstoffatome im Alkylrest aufweisenden Alkylmethacrylat und 0 - 85 Gew.-% eines anderen, damit mischpolymerisierbaren Vinylmonomeren aufgebaut ist.

**6.** Verfahren zur Herstellung eines sprühgetrockneten Emulsionspolymerisats gemäß den Ansprüchen 1 bis 5 durch Sprühtrocknen einer wäßrigen Dispersion mit einem Gehalt von Latexteilchen von zwei verschiedenen Emulsionspolymerisaten A und B, dadurch gekennzeichnet, daß man eine Dispersion, die als
A ein Emulsionspolymerisat mit einer dynamischen Glastemperatur über 90 °C, aufgebaut zu
70 - 100 Gew.-% aus Methylmethacrylat und/oder Styrol,
0 - 20 Gew.-% aus einem Alkylacrylat oder einem von Methylmethacrylat verschiedenen Alkylmethacrylat,
0 - 10 Gew.-% aus anderen, damit
mischpolymerisierbaren Vinylmonomeren
und als
B ein Emulsionspolymerisat mit einer dynamischen Glastemperatur unter 105 °C,
wobei die dynamische Glastemperatur von B mindestens 10 K unter der von A liegt, der Sprühtrocknung bei Temperaturen unterwirft, bei denen Pulverkörner aus aggregierten Latexteilchen entstehen.

**7.** Verfahren nach Anspruch 6, dadurch gekennzeichnet, daß das sprühgetrocknete Emulsionspolymerisat bei einer Temperatur von dem zum Trocknen verwendeten Luftstrom getrennt wird, die zwischen den statischen Glastemperaturen der Emulsionspolymerisate A und B liegt.

**8.** Verfahren nach Anspruch 7, dadurch gekennzeichnet, daß das sprühgetrocknete Emulsionspolymerisat bei einer Temperatur von dem zum Trocknen verwendeten Luftstrom getrennt wird, bei der das Emulsionspolymerisat A einen Schubmodul von mindestens 800 $N/mm^2$ und das Emulsionspolymerisat B einen Schubmodul nicht über 800 $N/mm^2$ haben.

**9.** Verwendung des sprühgetrockneten Emulsionspolymerisats gemäß den Ansprüchen 1 bis 5 als PVC-Verarbeitungshilfsmittel.

**10.** Formmasse, enthaltend 80 bis 99,9 Gew.-% PVC oder eines überwiegend aus Vinylchlorid aufgebauten Mischpolymerisats und 0,1 bis 20 Gew.-% des sprühgetrockneten Emulsionspolymerisats gemäß den Ansprüchen 1 bis 5.

## Claims

1. Spray-dried emulsion polymer consisting of grains of powder made up of aggregated latex particles, containing latex particles of at least two different emulsion polymers A and B, characterised in that the emulsion polymer A is present in a larger amount than B and
   A is an emulsion polymer with a dynamic glass transition temperature of over 90 °C, made up of
      70 to 100 wt.% of methyl methacrylate and/or styrene,
      0 to 20 wt.% of an alkyl acrylate or an alkyl methacrylate other than methyl methacrylate,
      0 to 10 wt.% of other vinyl monomers which are copolymerisable therewith
   B is an emulsion polymer with a dynamic glass transition temperature of below 105 °C and the dynamic glass transition temperature of B is at least 10 K below that of A.

2. Spray-dried emulsion polymer according to Claim 1, characterised in that it contains emulsion polymers A and B in proportions of 70 : 30 to 99.5 : 0.5 parts by weight.

3. Spray-dried emulsion polymer according to Claims 1 and 2, characterised in that the latex particles of the emulsion polymer B have a smaller particle size than the latex particles of emulsion polymer A.

4. Spray-dried emulsion polymer according to Claims 1 to 3, characterised in that the latex particles of emulsion polymer A in the powder grains are not sintered or fused with one another and that the latex particles of emulsion polymer B are sintered or fused with one another and with those of the emulsion polymer A.

5. Spray-dried emulsion polymer according to Claims 1 to 4, characterised in that the emulsion polymer B is made up of 15 to 100 wt.% of an alkyl acrylate or an alkyl methacrylate having more than 3 carbon atoms in the alkyl group and 0 to 85 wt.% of another vinyl monomer which is copolymerisable therewith.

6. Process for preparing a spray-dried emulsion polymer according to Claims 1 to 5 by spray-drying an aqueous dispersion containing latex particles of two different emulsion polymers A and B, characterised in that a dispersion containing as
   A an emulsion polymer with a dynamic glass transition temperature of over 90 °C, made up of
      70 to 100 wt.% of methyl methacrylate and/or styrene,
      0 to 20 wt.% of an alkyl acrylate or an alkyl methacrylate other than methyl methacrylate,
      0 to 10 wt.% of other vinyl monomers copolymerisable therewith
   and as
   B an emulsion polymer with a dynamic glass transition temperature of under 105 °C, the glass transition temperature of B being at least 10 K below that of A,
   is subjected to spray-drying, at temperatures at which powder grains are formed from aggregated latex particles.

7. Process according to Claim 6, characterised in that the spray-dried emulsion polymer is separated from the air current used for drying, at a temperature which is between the static glass transition temperatures of the emulsion polymers A and B.

8. Process according to Claim 7, characterised in that air current used for drying, at a temperature at which the emulsion polymer A has a modulus of shear of at least 800 $N/mm^2$ and the emulsion polymer B has a modulus of shear not exceeding 800 $N/mm^2$.

9. Use of the spray-dried emulsion polymer according to Claims 1 to 5 as PVC processing adjuvants.

10. Moulding composition containing 80 to 99.9 wt.% of PVC or a copolymer synthesised predominantly from vinyl chloride and 0.1 to 20 wt.% of the spray-dried emulsion polymer according to Claims 1 to 5.

## Revendications

1. Produit de polymérisation en émulsion séché par pulvérisation, constitué par des grains de poudre qui sont composés de particules de latex agrégées comprenant des particules de latex d'au moins deux produits de polymérisation en émulsion A et B différents, caractérisé en ce que le produit de polymérisation en émulsion A est présent dans une proportion plus grande que B, en ce que A est un produit de polymérisation en émulsion ayant une température de transition vitreuse dynamique supérieure à 90 ° C, composé

pour 70 à 100% en poids, de méthacrylate de méthyle et/ou de styrène,

pour 0 à 20% en poids, d'un acrylate d'alkyle ou d'un méthacrylate d'alkyle différent du méthacrylate de méthyle,

pour 0 à 10% en poids, d'autres monomères vinyliques copolymérisables avec ceux-ci,

et B est un produit de polymérisation en émulsion ayant une température de transition vitreuse dynamique inférieure à 105 ° C, et en ce que la température de transition vitreuse dynamique de B se situe à 10 K au moins au-dessous de celle de A.

**2.** Produit de polymérisation en émulsion séché par pulvérisation selon la revendication 1, caractérisé en ce qu'il contient les produits de polymérisation en émulsion A et B dans un rapport quantitatif de 70:30 à 99,5:0,5 parties en poids.

**3.** Produit de polymérisation en émulsion séché par pulvérisation selon la revendication 1 ou 2, caractérisé en ce que les particules de latex du produit de polymérisation en émulsion B ont une plus petite grosseur que les particules de latex du produit de polymérisation en émulsion A.

**4.** Produit de polymérisation en émulsion séché par pulvérisation selon l'une quelconque des revendications 1 à 3, caractérisé en ce que les particules de latex du produit de polymérisation en émulsion A ne sont pas unies entre elles par frittage ou soudage dans les grains de poudre, et en ce que les particules de latex du produit de polymérisation en émulsion B sont unies entre elles et à celles du produit de polymérisation en émulsion A par frittage ou soudage.

**5.** Produit de polymérisation en émulsion séché par pulvérisation selon l'une quelconque des revendications 1 à 4, caractérisé en ce que le produit de polymérisation en émulsion B est constitué pour 15 à 100% en poids d'un acrylate d'alkyle ou d'un méthacrylate d'alkyle comportant plus de 3 atomes de carbone dans le reste alkyle et pour 0 à 85% en poids d'un autre monomère vinylique copolymérisable avec celui-ci.

**6.** Procédé de préparation d'un produit de polymérisation en émulsion séché par pulvérisation selon l'une quelconque des revendications 1 à 5, par séchage par pulvérisation d'une dispersion aqueuse contenant des particules de latex de deux produits de polymérisation en émulsion A et B différents, caractérisé en ce qu'on soumet au séchage par pulvérisation, à des températures auxquelles des grains de poudre sont formés à partir de particules de latex agrégées, une dispersion qui contient, en tant que A, un produit de polymérisation en émulsion ayant une température de transition vitreuse dynamique supérieure à 90 ° C, composé

pour 70 à 100% en poids, de méthacrylate de méthyle et/ou de styrène,

pour 0 à 20% en poids, d'un acrylate d'alkyle ou d'un méthacrylate d'alkyle différent du méthacrylate de méthyle,

pour 0 à 10% en poids, d'autres monomères vinyliques copolymérisables avec ceux-ci,

et, en tant que B, un produit de polymérisation en émulsion ayant une température de transition vitreuse dynamique inférieure à 105 ° C, la température de transition vitreuse dynamique de B se situant à 10 K au moins au-dessous de celle de A.

**7.** Procédé selon la revendication 6, caractérisé en ce que le produit de polymérisation en émulsion séché par pulvérisation est séparé du courant d'air utilisé pour le séchage à une température qui se situe entre les températures de transition vitreuse statiques des produits de polymérisation en émulsion A et B.

**8.** Procédé selon la revendication 7, caractérisé en ce que le produit de polymérisation en émulsion séché par pulvérisation est séparé du courant d'air utilisé pour le séchage à une température à laquelle le produit de polymérisation en émulsion A a un module d'élasticité transversale d'au moins 800 $N/mm^2$ et le produit de polymérisation en émulsion B a un module d'élasticité transversale non supérieur à 800 $N/mm^2$.

**9.** Utilisation du produit de polymérisation en émulsion séché par pulvérisation selon l'une quelconque des revendications 1 à 5 comme produit auxiliaire dans la transformation de PVC.

**10.** Masse à mouler, contenant 80 à 99,9% en poids de PVC ou d'un copolymère constitué principalement de chlorure de vinyle et 0,1 à 20% en poids du produit de polymérisation en émulsion séché par pulvérisation selon l'une quelconque des revendications 1 à 5.

Figur 1

Korngrößenverteilung (differentielle Volumenverteilung) ohne und mit Ultraschall-Behandlung

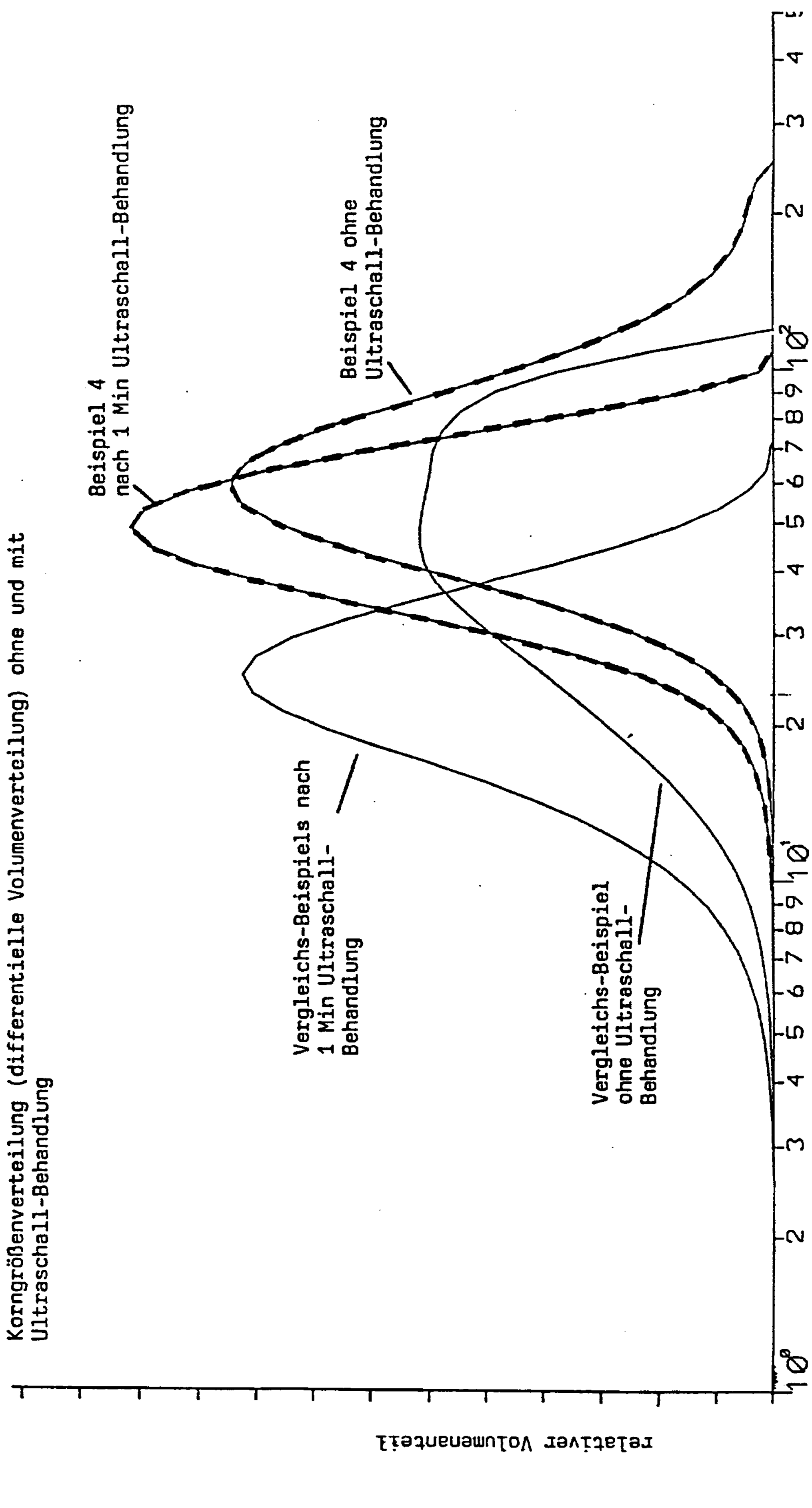

Figur 2

Korngrößenverteilung Vergleichsbeispiel

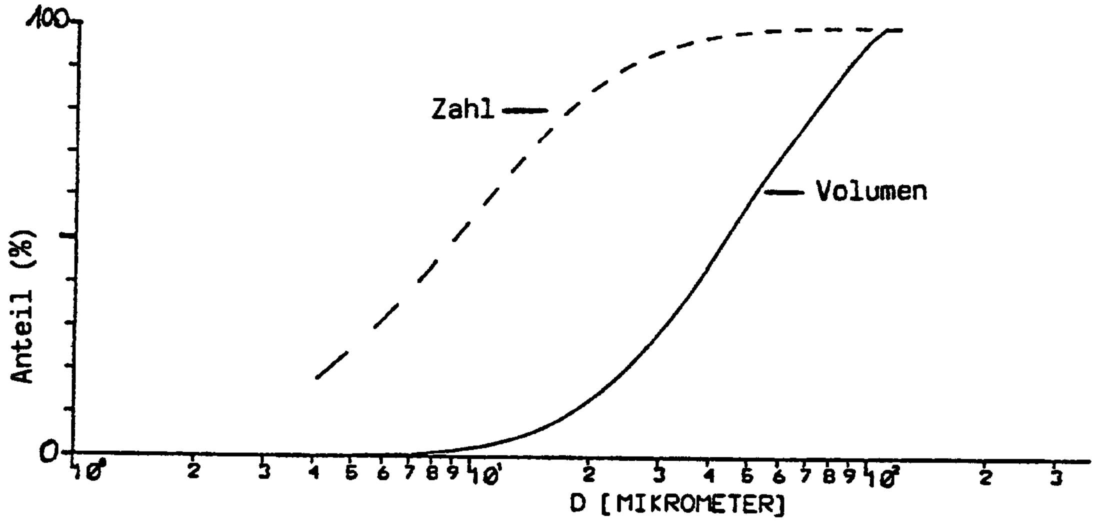


Figur 3

Korngrößenverteilung Beispiel 1

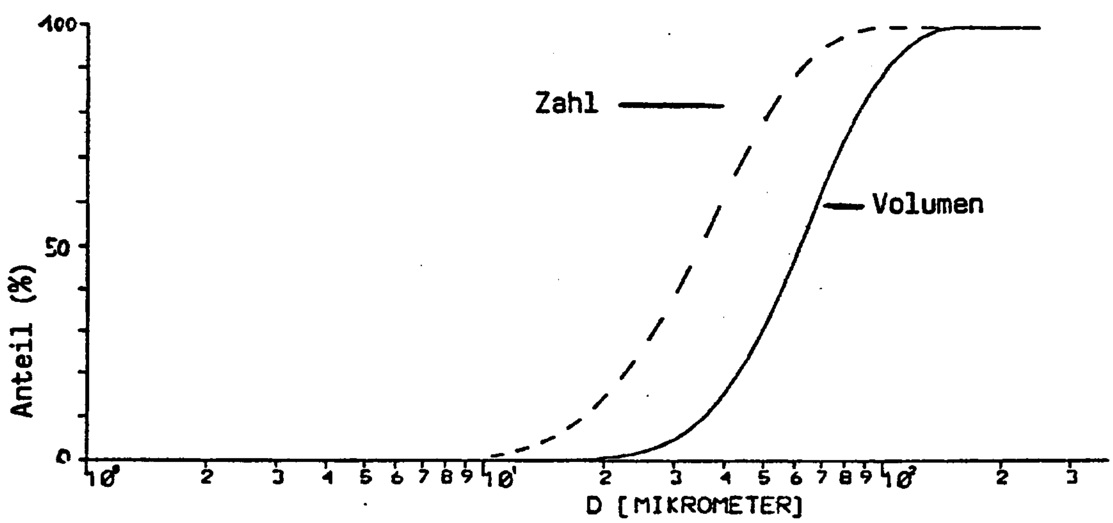

Figur 4

Korngrößenverteilung Beispiel 3

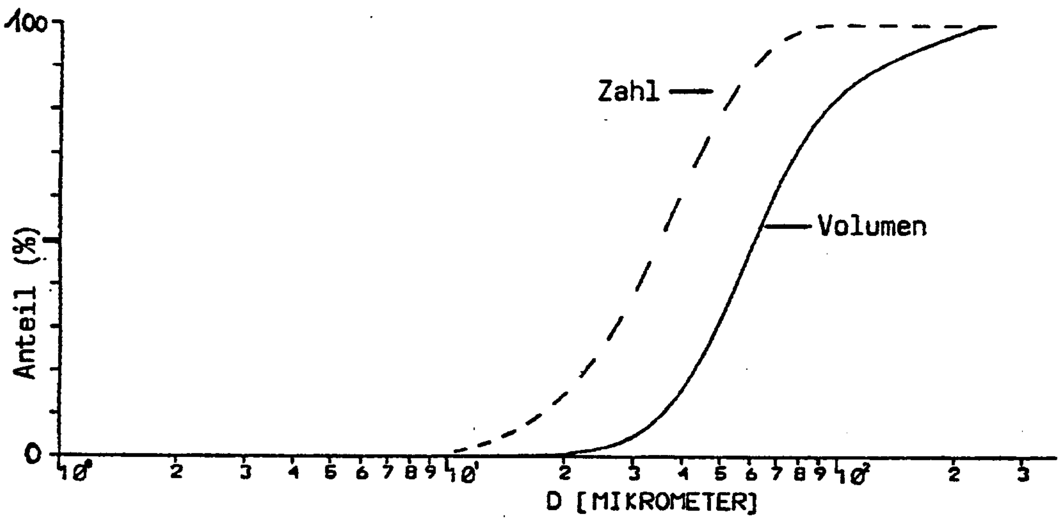


Figur 5

Korngrößenverteilung Beispiel 4